# EUROPÄISCHE PATENTSCHRIFT

(11) **EP 0 714 717 B1**
(45) Veröffentlichungstag und Bekanntmachung des Hinweises auf die Patenterteilung: **21.10.1998**
(21) Anmeldenummer: 94119093.6
(22) Anmeldetag: 03.12.1994
(51) Int. Cl.: B22D 11/126, B23K 7/00

(54) **Stahlstranggiessanlage mit im Synchronlauf auf den Strang aufsetzender Brennschneidmaschine**
Continuous casting installation with oxygen cutting machine which runs synchronuously with the slab
Installation de coulée continue avec une machine d'oxycoupage qui travaille synchrone avec la coulée

(43) Veröffentlichungstag der Anmeldung: 05.06.1996
(73) Patentinhaber: HORST K. LOTZ Feuerschutzbaustoffe, D-65719 Hofheim (DE)
(72) Erfinder: Lotz, Horst K., D-65719 Hofheim-Wallau (DE)

(56) Entgegenhaltungen:
- EP-A- 0 213 389
- DE-A- 2 927 311
- DE-C- 883 083

## Beschreibung

Zum Abtrennen kontinuierlich gegossener Stränge (1) aus Stahl auf gewünschte Längen werden in Strahlstranggießanlagen Sauerstoff-Brennschneidmaschinen eingesetzt, die zur Erzeugung des Synchronlaufs zwischen ihrem Schneidbrenner (3) und dem Strang (1) mit preßluftbetätigten An- oder Aufklemmhebeln ausreichend Reibung zur Mitnahme durch den Strang (1) bewirken (siehe z.B.: EP-A-213389).

Andere Brennschneidmaschinen, als Aufsetzmaschinen bekannt, setzen sich zur Mitnahme durch den Strang (1) durch Einziehen des Fahrewerks voll auf den Strang (1). Weiterentwickelte Maschinen dieser Art ziehen nicht ihr Fahrwerk ein, sondern senken einen Maschinenteil, nämlich die für die Brennerquerbewegung vorhandene, mit Aufsetzkufen (6) ausgestattete Brennerwagenlaufbahn (5) mittels pneumatischer oder elektromotorischer Antriebe (9) ab und hebt sie nach vollendetem Schneidvorgang vor dem Rücklauf wieder an.

Zur Erzielung einer bestmöglichen Stücklängenauigkeit wird der Aufsetzvorgang in 2 Stufen vollzogen:
- 1. Voraufsetzen =: Absenken, bis die Kufen (6) den Strang (1) berühren, ohne daß eine Mitnahme erfolgt, da die Brennschneidmaschine über ihre Fahrewerksbremse noch festgehalten wird.
- 2. Aufsetzen =: Die Fahrwerksbremse wird gelöst und das volle Aufsetzgewicht abgesenkt, um schnellstens volle Reibung zu erzeugen.

In den meisten modernen Stranggießanlagen sind solche Teil-Aufsetz-Brennschneidmaschinen, die nach diesem Aufsetz-Verfahren arbeiten, zu finden.

Der nachfolgend beschriebenen Erfindung liegt die für diese Maschinengattung geltende Aufgabe zugrunde, die kostenträchtigen und wartungsaufwendigen Hub- und Senkantriebe (9) mit Motor (27), Getriebe (28), Bremse, Ketten (10) und Kettenrädern für das große Absenkgewicht der Brennerwagenlaufbahn (5) mit gewisser Vorabsenkschwierigkeit zu vereinfachen, ohne daß sehr teure und große neue Teile eingeführt werden, die zusätzlich Raum brauchen, die Maschine wesentlich verlängern und technisch kompliziert bzw. empfindlich sind.

Dabei soll das Absenken der Brennerwagenlaufbahn (5) zum Aufsetzen nicht aufgegeben werden, weil dadurch die Einzelabsenkung der Schneidbrenner (3) mit Höhentastung zur Erzielung eines besonders vorteilhaften Düsenabstandes überflüssig ist, und die Aufsetzkufen (6) der Brennerwagenlaufbahn (5) die höher sitzenden Schneiddüsen (2) zusätzlich vor mechanischer Beschädigung schützen.

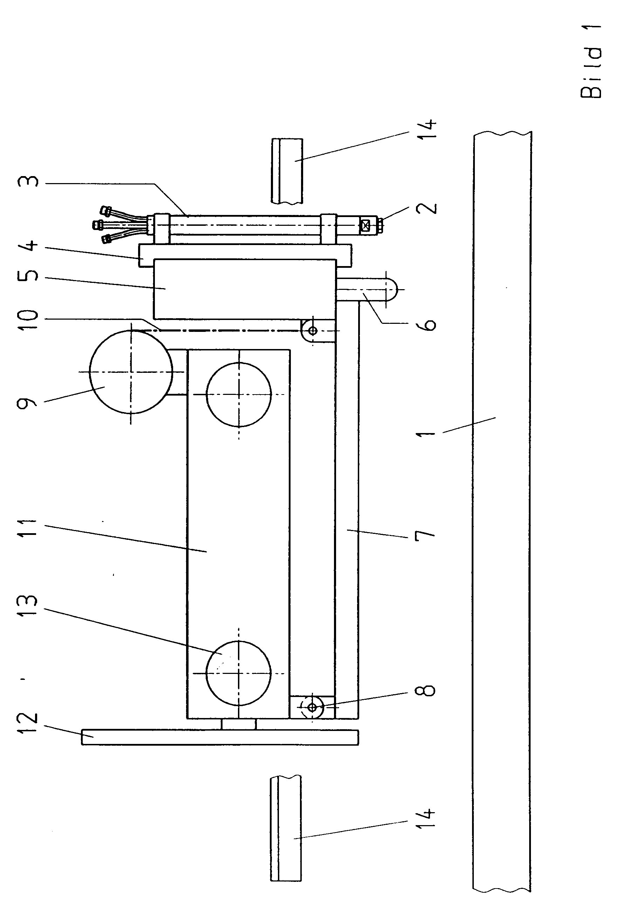

In **Bild 1** ist zur Erläuterung die grundsätzliche Ausführung einer bisher üblichen Strangbrennschneidmaschine in Seitenansicht mit durch motorischen Antrieb (9) absenkende und aufsetzende Brennerwagenlaufbahn (5) dargestellt, soweit sie zum Verständnis der nachfolgend beschriebenen Erfindung erforderlich erscheinen.

Über einem Strang (1) sieht man die Schneiddüse (2) in einem Schneidbrenner (3), der durch einen motorisch getriebenen Brennerwagen (4) an einer Brennerwagenlaufbahn (5) quer zum Strang (1) verfahren wird, wenn diese mit ihren Aufsetzkufen (6) auf dem Strang (1) aufliegt. Zum Absenken für den Synchronlauf und zur Erstellung des Düsenabstandes ist die Brennerwagenlaufbahn (5) an einem Senkhebel (7) befestigt, der seinerseits am Ende des Maschinenwagens (11) im Lager (8) drehbar angeordnet ist. Am Senkhebel (7) in der Nähe der Brennerwagenlaufbahn (5) ist eine Kette (10) befestigt, die von einem Kettenrad des Antriebes (9) abgelassen oder hochgezogen wird. Dieser Antrieb (9) besteht aus Motor und Bremse, Getriebe, Kupplung und Kettenrad und muß das tonnenschwere Gewicht der Brennerwagenlaufbahn (5) erst schnell, dann sanft absenken, dann plötzlich schnell voll lösen, um dann nach dem Synchronlauf schnell und sicher das ganze Gewicht anzuheben. Der Antrieb (9) sitzt auf dem Maschinenwagen (11) am vorderen Ende und ist gegebenenfalls doppelt = 2 Kettenräder, 2 Getriebe usw. ausgeführt. Der Maschinenwagen (11) verfährt motorisch mit den Laufrädern (13) auf einer Laufbahn (14) und hat am hinteren Ende eine senkrecht angebrachte Schutzwand (12), die als Wärmeschutzwand also wasserdurchflossen und als Geländer dient, entsprechend hoch und so breit wie die Maschine ist.

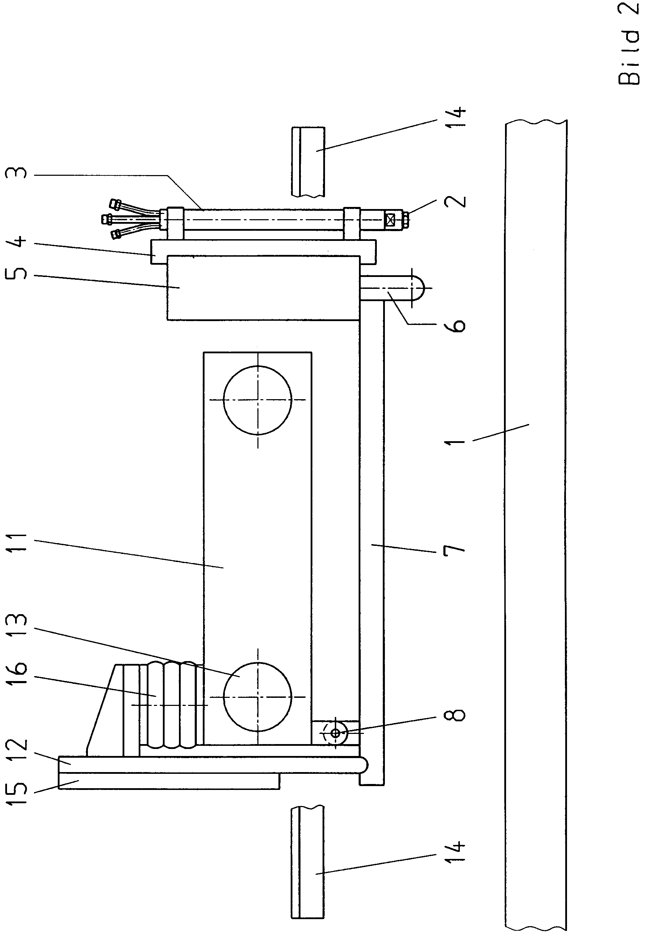

Erfindungsgemäß kann man nun, wie in **Bild 2** dargestellt, diese hintere Schutzwand (12) mit einem Zusatzgewicht (15) beschwert beweglich auf die Verlängerung des Senkhebels (7) außerhalb des Lagers (8) setzen und das Gewicht der Brennerwagenlaufbahn (5) damit ausgleichen, ja besser es übertreffen, um ein selbsttätiges Anheben der Brennerwagenlaufbahn (5) bei Betriebsmittelausfall zu bewirken. Balgzylinder (16) zwischen der Schutzwand (12) und Maschinenwagen (11) heben das Mehrgewicht der Schutzwand (12) gegenüber der Brennerwagenlaufbahn (5) mit leichtem Übermaß an, um ein leichtes Aufsetzen = ein Voraufsetzen zu erreichen. Ein hoher Luftdruck im Balgzylinder (16) danach vergrößert die Hubkraft auf die Schutzwand (12) erheblich und führt zum vollen Aufsetzen der Brennerwagenlaufbahn (5) auf den Strang (1) zur Mitnahmereibung für den Synchronlauf. In der praktischen Anwendung kann die Schutzwand (12) mit Zusatzgewicht (15) preiswert als eine dicke Blechplatte oder gar aus einer Bramme brenngeschnitten werden. Zusätzliche Zusatzgewichte (15) dienen dann gegebenenfalls durch Anhängen oder Abnehmen zum Anpassen an die vorliegenden Umstände.

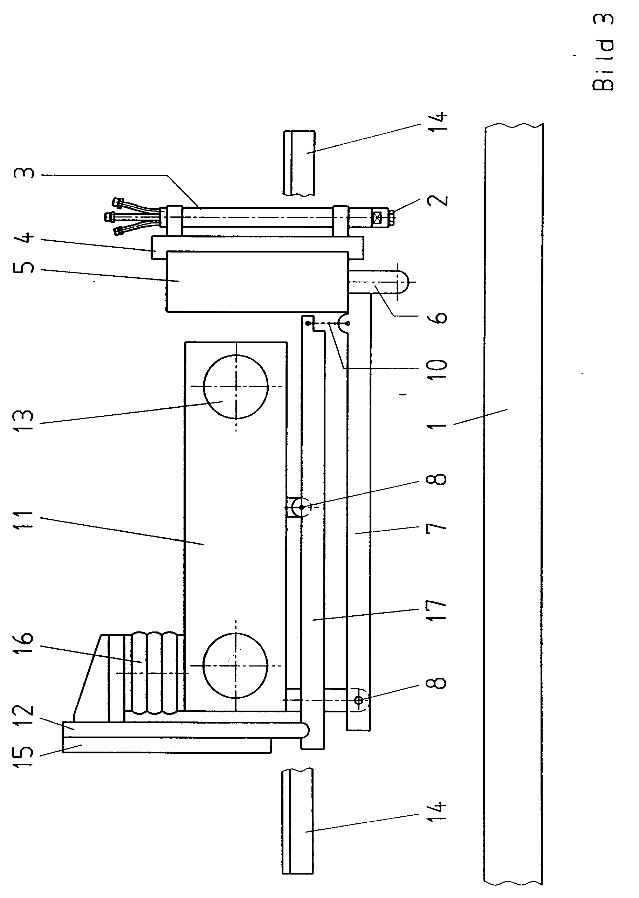

Da das Gewicht der Schutzwand (12) durch die vorliegenden Hebelverhältnisse nach **Bild 1** extrem groß würde oder der Maschinenwagen (11) bzw. die Maschine zu lang, wird nach **Bild 3** vorgeschlagen, unter dem Maschinenwagen (11) einen weiteren Waagehebel (17) einzuführen, der mit besserem Verhältnis am Maschinenwagen (11) gelagert auf einer Seite die Schutzwand (12) trägt und auf der anderen Seite nahe an der Brennerwagenlaufbahn mit einer kurzen Kette (10) den Senkhebel (7) hochhält. Dabei müssen natürlich die Hub- und Absenkwege von Schutzwand (12) und Brennerwagenlaufbahn (5) berücksichtigt werden.

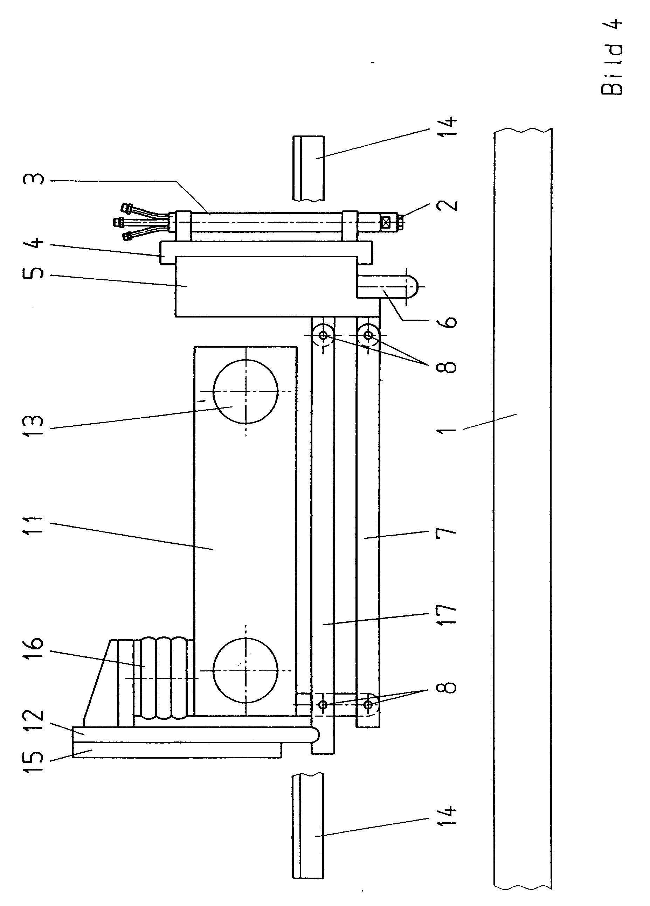

In **Bild 4** ist eine weitere Verbesserung der Erfindung zu erkennen. Werden die Drehlager (8) für die Senkhebel (7) und Waagehebel (17) übereinander und fest zueinander angeordnet und beide Hebel (7, 17) entsprechend fest und übereinander an der Brennerwagenlaufbahn (5) angelenkt, so entsteht erfindungsmäßig nutzbar ein Parallelogramm, das die Lage von Brennerwagenlaufbahn (5) und damit Schneidbrenner (3) senkrecht hält und genau senkrechte Schnitte bei verschiedenen Dicken des Stranges (1) ermöglicht.

Die Schutzwand (12) muß in jedem Fall aufgrund ihres Gewichtes in ihrer senkrechten und beweglichen Lage gut geführt werden, was vielleicht durch geeignete Balgzylinder (16), wie in einem der **Bilder 2 bis 4** dargestellt, erzielt wird.

Auch sind einfache Gleit- oder Rollenführungen möglich, die aber beim Beginn einer Vor- oder Rückwärtsbewegung von der ankippenden Schutzwand (12) mit Zusatzgewicht (15) unnötig belastet werden. Es wird daher vorgeschlagen, die Schutzwand (12) von vornherein leicht schräg zur Senkrechten anzulehnen, daß sie bei der höchsten Beschleunigung in gleichgültig welcher Richtung nicht kippen und nur eine Gleit- bzw. Rollführungsseite gebraucht wird und auf der anderen nur eine Haltesicherung.

### Legende

- 1: Strang
- 2: Brenndüse
- 3: Schneidbrenner
- 4: Brennerwagen
- 5: Brennerwagenlaufbahn
- 6: Aufsetzkufe
- 7: Senkhebel
- 8: Lager
- 9: Hub- und Senkantrieb
- 10: Kette
- 11: Maschinenwagen
- 12: Schutzwand (hinten)
- 13: Laufrad
- 14: Laufbahn
- 15: Zusatzgewicht
- 16: Balgzylinder
- 17: Waagehebel

## Patentansprüche

1. Strangbrennschneidmaschine mit für den Synchronlauf mittels Reibung auf den Strang (1) aufsetzender Brennerwagenlaufbahn (5), dadurch gekennzeichnet, daß ein an der Brennschneidmaschine vorhandenes oder angebrachtes Maschinenteil mit einem die Brennerwagenlaufbahn (5) übertreffenden Gewicht, mit Hebel (7, 17) oder Seilzügen mit dieser Brennerwagenlaufbahn (5) verbunden diese anhebt und selbst von Balgzylindern (16) oder anderem kleinen Hubantrieb angehoben die Brennerwagenlaufbahn (5) zum Aufsetzen absenkt.

2. Strangbrennschneidmaschine mit für den Synchronlauf mittels Reibung auf den Strang (1) aufsetzender Brennerwagenlaufbahn (5) nach Anspruch 1, dadurch gekennzeichnet, daß die hintere senkrechte Schutzwand (12) der Brennschneidmaschine ein geeignetes Gewicht besitzt und auf Waagehebeln (17) ruht, die am Maschinenrahmen gelagert die Brennerwagenlaufbahn (5) am anderen Ende trägt. Die auch als hinterer Maschinenabschluß dienende Schutzwand (12) wird durch Rollen- oder Gleitführungen in nahezu senkrechter Lage gehalten.

3. Strangbrennschneidmaschine mit für den Synchronlauf mittels Reibung auf den Strang (1) aufsetzender Brennerwagenlaufbahn (5) nach einem der Ansprüche 1 bis 2, dadurch gekennzeichnet, daß die Brennerwagenlaufbahn (5) mit einfachen Senkhebeln (7) auf und ab bewegbar ist, die am anderen Ende am Maschinenwagen (11) drehbar gelagert sind und ihrerseits von Waagehebeln (17) mit Lagerung im Maschinenwagen (11), die die Schutzwand (12) als Gegengewicht tragen, in Nähe der Brennerwagenlaufbahn (5) angelenkt gehoben und gesenkt werden können.

4. Strangbrennschneidmaschine mit für den Synchronlauf mittels Reibung auf den Strang (1) aufsetzender Brennerwagenlaufbahn (5) nach einem der Ansprüche 1 bis 3, dadurch gekennzeichnet, daß die Lager der Senkhebel (7) und der Waagehebel (17) am Maschinenwagen (11) wie auch an der Brennerwagenlaufbahn (5) so übereinander liegen, daß sie mit dem Maschinenwagen (11) und der Brennerwagenlaufbahn (5) ein Parallelogramm bilden. Die absenkbare Schutzwand (12) sitzt dabei hinter dem Lager (8) am Maschinenwagen (11) als Gegengewicht auf dem Waagehebel.

5. Strangbrennschneidmaschine mit für den Synchronlauf mittels Reibung auf den Strang (1) aufsetzender Brennerwagenlaufbahn (5) nach einem der Ansprüche 1 bis 4, dadurch gekennzeichnet, daß die als schwere Platte ausgeführte Schutzwand (12) leicht angekippt nur an einer Seite geführt wird und auf der anderen Seite nur eine Sicherung gegen unplanmäßiges Umkippen vorhanden ist.

## Claims

1. Continuous-casting installation with contacting torch carriage track (5) for synchronous run via friction on the strand (1), defined by that an existing or fixed machine part on the torch cutting machine with a weight surpassing the torch carriage track (5) and being connected with this torch carriage track (5) by the help of levers (7, 17) or cable winches, lifts and after that lowers the torch carriage track (5) for contacting while being lifted itself via bellow cylinders (16) or other little lifting drives.

2. Continuous-casting installation with contacting torch carriage track (5) for synchronous run via friction on the strand (1), by claim 1 defined by that the backward vertical protection wall (12) of the torch cutting machine has an appropriate weight and rests on balance levers (17) and by being positioned at the machine frame bears the torch cutting track (5) at the other end. This protection wall (12), which is also used as backward machine limitation, is kept in a nearly vertical position via roller- or slide guidances.

3. Continuous-casting installation with contacting torch carriage track (5) for synchronous run via friction on the strand (1), by one of the claims 1 to 2 defined by that the torch carriage track (5) can be moved up- and downwards with simple lowering levers (7), which are positioned rotatably at the other end of the machine carriage (11) and which themselves can be lifted and lowered by balance levers (17) with bearing in the machine carriage (11), which bear the protection wall (12) as counter-weight and which are linked nearby the torch carriage track (5).

4. Continuous-casting installation with contacting torch carriage track (5) for synchronous run via friction on the strand (1), by one of the claims 1 to 3 defined by that the bearings of the lowering levers (7) and balance levers (17) are superimposed both at the machine carriage (11) and at the torch carriage track (5) in a way that they form a parallelogram together with the machine carriage (11) and the torch carriage track (5), the lowerable protection wall (12) being thereby placed as counter-weight on the balance lever (17) behind the bearing (8) at the machine carriage (11).

5. Continuous-casting installation with contacting torch carriage track (5) for synchronous run via friction on the strand (1), by one of the claims 1 to 4 defined by that the protection wall (12), which is carried out as heavy plate, is conducted slightly tilted only on the one side while on the other side is only provided a protection against unexpexted tilting.

## Revendications

1. Installation de coulée continue avec assise sur la coulée (1) de la voie de roulement du chariot porte-chalumeau (5) pour assurer le déplacement synchrone par friction, caractérisée en ce que une pièce existante de la machine ou installée sur la machine d'oxycoupage, avec un poids supérieur à la voie de roulement du chariot porte-chalumeau (5), étant liée avec cette voie de roulement (5) par des leviers (7, 17) ou des palans, soulève et ensuite rabaisse la voie de roulement du chariot porte-chalumeau (5) pour l'assise sur la coulée, cette pièce étant soulevée elle-même par des cylindres à soufflet (16) ou autres petites commandes de levée.

2. Installation de coulée continue avec assise sur la coulée (1) de la voie de roulement du chariot porte-chalumeau (5) pour assurer le déplacement synchrone par friction selon la revendication 1, caractérisée en ce que la protection (12) arrière vertical de la machine d'oxycoupage a un poids approprié et repose sur des leviers de bascule (17), qui en étant placés sur le cadre de la machine portent la voie de roulement du chariot porte-chalumeau (5) à l'autre extrémité. Cette protection (12) qui sert aussi d'extrémité arrière de la machine est maintenue dans une position presque verticale à l'aide de guidages à rouleaux ou à glissière.

3. Installation de coulée continue avec assise sur la coulée (1) de la voie de roulement du chariot porte-chalumeau (5) pour assurer le déplacement synchrone par friction selon l'une des revendications 1 et 2, caractérisée en ce que la voie de roulement du chariot porte-chalumeau (5) peut être levée et abaissée par des leviers d'abaissement (7) simples, qui sont montés sur pivot à l'autre extrémité du chariot machine (11), et pouvant être soulevés et abaissés eux-mêmes par des leviers de bascule (17), supportés dans un palier logé dans le chariot machine (11), et portant la protection (12) comme contre-poids et qui sont articulés prêt de la voie de roulement du chariot porte-chalumeau.

4. Installation de coulée continue avec assise sur la coulée (1) de la voie de roulement du chariot porte-chalumeau (5) pour assurer le déplacement synchrone par friction selon l'une des revendications 1 à 3, caractérisée en ce que les paliers des leviers d'abaissement (7) et des leviers de bascule (17) sont superposés d'une telle manière sur le chariot machine (11) ainsi que sur la voie de roulement du chariot porte-chalumeau (5) qu'ils forment un parallélogramme avec ces derniers. La protection (12) abaissable est ainsi placée sur le levier de bascule comme contre-poids derrière le palier (8) du chariot machine (11).

5. Installation de coulée continue avec assise sur la coulée (1) de la voie de roulement du chariot porte-chalumeau (5) pour assurer le déplacement synchrone par friction selon l'une des revendications 1 à 4, caractérisée en ce que la protection (12) constituée d'une lourde plaque est menée légèrement inclinée sur un seul côté, l'autre côté étant seulement pourvu d'une sécurité contre un basculement imprévu.
